# NEUE EUROPÄISCHE PATENTSCHRIFT

(11) **EP 0 184 736 B2**
(45) Veröffentlichungstag und Bekanntmachung des Hinweises auf die Entscheidung über den Einspruch: **20.03.1996**
(45) Hinweis auf die Patenterteilung: 20.06.1990
(21) Anmeldenummer: 85115193.6
(22) Anmeldetag: 29.11.1985
(51) Int. Cl.: G05B 19/4155

(54) **Einrichtung zur Steuerung einer Werkzeugmaschine**
Numerical control for a machine tool
Commande numérique pour une machine-outil

(30) Priorität: 13.12.1984 DE 3445511
(43) Veröffentlichungstag der Anmeldung: 18.06.1986
(73) Patentinhaber: SIEMENS AKTIENGESELLSCHAFT, D-80333 München (DE)
(72) Erfinder: Wetzel, Friedrich, D-8551 Heroldsbach (DE)

(56) Entgegenhaltungen:
- EP-A- 0 113 010
- DE-A- 2 632 277
- DE-A- 2 642 250
- DE-A- 2 702 525

## Beschreibung

Die Erfindung bezieht sich auf eine Einrichtung zur Steuerung einer mehrachsigen Werkzeugmaschine gemäß vorgegebenen, simultan zu verarbeitenden Teileprogrammen, die jeweils eine Folge von Sätzen beinhalten, welche Ortsinformationen aufeinanderfolgender Bearbeitungspunkte enthalten und welche von einem interpolierenden Umsetzer jeweils in eine satzspezifische Anzahl von Sehnen der jeweils zu durchfahrenden Bearbeitungsbahn unterteilt werden, die zur Steuerung der vorgegebenen Achsen der Werkzeugmaschine dienen, wobei die Sätze jedes Teileprogramms fortlaufend in teileprogrammspezifische Speicherbereiche mindestens eines Arbeitsspeichers eingespeichert werden, wobei vom interpolierenden Umsetzer sukzessiv innerhalb jeweils eines Zyklusses die jeweils aktuellen gespeicherten Sätze der Teileprogramme abgefragt werden, wobei Zyklus auf Zyklus folgt und wobei jeweils nach einer Anzahl von Zyklen, welche die Interpolation eines jeweils aktuellen Satzes erfordert hat, jeweils ein folgender Satz des jeweiligen Teileprogramms dem jeweiligen Speicherbereich des Arbeitsspeichers eingespeichert wird, wobei dieses Einspeichern des jeweils folgenden Satzes eines Teileprogramms jeweils durch ein den Abschluß des Ermittelns der jeweils letzten zu ermittelnden Sehne des jeweils aktuellen Satzes anzeigendes Quittungssignal des interpolierenden Umsetzers ausgelöst wird.

Eine Einrichtung zum Steuern mehrachsiger Werkzeugmaschinen ist aus der DE-Anmeldung 34 02 706 bekannt. Dabei sind für verschiedene Teileprogramme, die simultan zu bearbeiten sind, jeweils mehrere numerische Steuerungen vorgesehen, deren Zusammenspiel über eine Anpaßsteuerung koordiniert wird.

Die Verwendung einer einzigen Steuerung zum simultanen Betrieb verschiedener Zustellachsen einer mehrachsigen Werkzeugmaschine ist aus der gattungsbildenden DE-A-27 02 525 bekannt. Dabei wird das Einlesen von jeweils zu interpolierenden Sätzen in einem Anforderungssystem realisiert, so daß immer dann, wenn ein Satz vollständig bearbeitet worden ist, ein neuer Satz angefordert wird. Die Interpolation in den verschiedenen Kanälen der Steuerung erfolgt dabei jedoch in einem festen Zeittakt. Weil Interpolationsvorgänge hinsichtlich ihrer Zeitdauer jedoch durchaus variieren können, ist die Verwendung eines festen Zeittaktes, der jeweils auf die größte zu erwartende Zeit auszulegen wäre, nachteilig.

Aufgabe der Erfindung ist es, eine Einrichtung der eingangs genannten Art so auszubilden, daß ausgesprochen schnell eine einzige numerische Steuerung simultan die Steuersignale für sämtliche Achsen der Werkzeugmaschine ermitteln kann. Zu diesen Achsen sind dabei auch Hilfsachsen von Werkzeugwechslern, Ladeeinrichtungen usw. zu rechnen.

Gemäß der Erfindung wird diese Aufgabe dadurch gelöst, daß die sukzessive Fortschaltung innerhalb jedes Zyklusses zwischen den jeweils aktuellen Sätzen jeweils durch ein den Abschluß des Ermittelns der jeweils zu ermittelnden Sehne anzeigendes Quittungssignal des interpolierenden Umsetzers auslösbar ist.

Wenn der Start jedes Zyklusses durch ein Taktsignal eines Taktgenerators auslösbar ist, ist es möglich, die Zykluszeit konstant zu halten. Femer ermöglicht diese Maßnahme, daß durch Sperren des Taktgenerators vor dem Start der Zyklen in einfacher Weise der jeweils erste Satz jedes Teileprogramms bereits dem jeweils zugehörigen Speicherbereich des Arbeitsspeichers eingespeichert wird.

Eine vorteilhafte Ausbildung der Erfindung ist dadurch gekennzeichnet, daß die Zuführung der Sätze in die Arbeitsspeicher über Pufferspeicher erfolgt, welche die den jeweils aktuellen gespeicherten Sätzen jeweils unmittelbar folgenden Sätze beinhalten. Damit ist eine problemlose Übertragung der Sätze der Teileprogramme zum interpolierenden Umsetzer gewährleistet, was insbesondere dann von Vorteil ist, wenn diesem ein Umsetzer für die Satzaufbereitung vorgeschaltet ist, dessen Verarbeitungsrhythmus unabhängig von dem des interpolierenden Umsetzers ist.

Zwischen dem interpolierenden Umsetzer und der Werkzeugmaschine kann gemäß einer weiteren Ausbildung der Erfindung ein Lageregler zwischengeschaltet sein, um einen Bewegungsablauf der Werkzeugmaschine mit hoher Lagegenauigkeit zu gewährleisten.

Dem interpolierenden Umsetzer können gemäß einer weiteren vorteilhaften Ausbildung der Erfindung teileprogrammspezifische Hilfsspeicher zugeordnet sein, die für den Umsetzvorgang des interpolierenden Umsetzers erforderliche Speicherfunktionen in einfacher Weise übernehmen können.

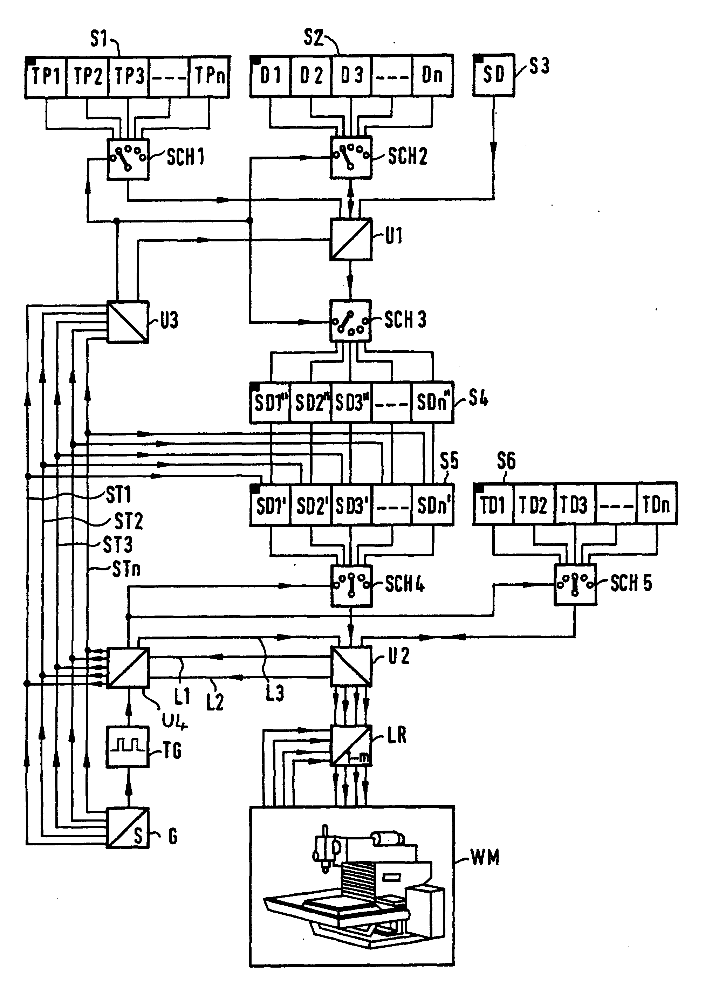

Ein Ausführungsbeispiel der Erfindung ist in der Zeichnung dargestellt und wird im folgenden näher erläutert.

Die Darstellung zeigt eine Werkzeugmaschine WM samt der zugehörigen Werkzeugmaschinensteuerung, die jedoch auf die für die Funktion der Erfindung wesentlichen Elemente beschränkt ist. Beispielsweise sind Ein- und Ausgabeelemente, wie Bedienfelder bzw. Anzeigegeräte, der Übersichtlichkeit halber nicht dargestellt.

In einem Teileprogrammspeicher S1 sind Teileprogramme TP1 bis TPn satzweise gespeichert, die jeweils für die Steuerung eines der simultanen Bewegungsabläufe der Werkzeugmaschine WM vorgesehen sind.

Unter Sätzen sind dabei jeweils Koordinaten zweier aufeinanderfolgender Bearbeitungspunkte zu verstehen, die durch weitere Parameter, z. B. Vorschubgeschwindigkeiten, ergänzt sind. Die Entfernung der Bearbeitungspunkte eines Satzes zueinander kann dabei durchaus unterschiedlich sein, so daß zur fortlaufenden Steuerung der Werkzeugmaschine WM die Sätze einer Interpolation bedürfen.

Eine Interpolation führt zu einzelnen Sehnen, worunter jeweils für den Anwendungsfall ausreichend genaue kurze Bewegungsabschnitte zu verstehen sind, auf die im folgenden noch eingegangen wird.

Für teileprogrammspezifische Daten D1 bis Dn ist ein in n Speicherbereiche gegliedeter Speicher S2 vorgesehen. Die Daten D1 sind dabei dem Teileprogramm TP1, die Daten Dn dem Teileprogramm TPn zuzuordnen. Femer sind in einem Speicher S3 systemtypische Daten SD, z. B. Nullpunktverschiebungsdaten, Werkzeugkorrekturdaten und Maschinendaten, abgelegt.

Die Teileprogramme TP1 bis TPn sind in einer anwenderfreundlichen Art und Weise verschlüsselt, die nicht ohne weiteres interpoliert werden kann. Aus diesem Grund werden die Teileprogramme TP1 bis TPn zusammen mit den systemtypischen Daten SD einem Umsetzer U1 für eine Satzaufbereitung zu einer relativ leicht interpolierbaren Form zugeleitet. Dabei wird über eine erste elektronische Schaltstufe SCH1 (in der Darstellung der Übersichtlichkeit halber als ein mehrstufiger Schalter angedeutet) jeweils ein Teileprogramm - im dargestellten Ausführungsbeispiel das Teileprogramm TP2 - dem Umsetzer U1 zugeführt. Über eine weitere gleichartige Schaltstufe SCH2 ist der Umsetzer U1 bidirektional mit dem Speicher S2 verbunden, so daß teileprogrammspezifische Daten, d. h. in diesem Fall die Daten D2 des zweiten Speicherbereiches, dem Umsetzer U1 zugeführt werden können, bzw. daß der Speicher S2 mit seinem jeweiligen Speicherbereich dem Umsetzer U1 als Arbeitsspeicher für die Umsetzung dienen kann.

Die Auswahl der Schaltstellungen der Schaltstufen SCH1 und SCH2 wird in noch zu schildernder Weise von einem Umsetzer U3 (Satzaufbereitungssteuerwerk) mit Hilfe von durch diesem auslösbaren Steuersignalen bestimmt. Ebenso erfolgt das Wirksamschalten des Umsetzers U1 für die Satzaufbereitung jeweils auf Veranlassung des Umsetzers U3.

Dem Umsetzer U1 für die Satzaufbereitung ist eine weitere elektronische Schaltstufe SCH3 nachgeschaltet, deren Schaltstellung synchron zur Schaltstellung der Schaltstufen SCH1 und SCH2 ebenfalls durch den Umsetzer U3 bestimmt wird. Im Ausführungsbeispiel gelangt damit der aufbereitete Satz des Teileprogramms TP2 in einen Speicherbereich für Satzdaten SD2" eines Pufferspeichers S4, der für alle n Teileprogramme TP1 bis TPn in n Speicherbereichen die Satzdaten SD1" bis SDn" speichert. Der Pufferspeicher S4 ist speicherbereichsweise mit den Speicherbereichen eines Arbeitsspeichers S5 verbunden, der jeweils die Satzdaten SD1' bis SDn' der Teileprogramme TP1 bis TPn für die jeweils für die Werkzeugmaschine WM aktuellen Sätze beinhaltet. Die Satzdaten SD1" bis SDn" stellen dabei die jeweils auf die aktuellen Satzdaten SD1' bis SDn' folgenden Satzdaten dar.

Die aktuellen Satzdaten SD1' bis SDn' gelangen über eine weitere elektronische Schaltstufe SCH4 an einen interpolierenden Umsetzer U2 (Interpolator), der die eingangs beschriebene Interpolation der aufbereiteten Sätze zu Sehnen realisiert. Dazu ist der Interpolator U2 über eine zusätzliche elektronische Schaltstufe SCH5 mit einem n Speicherbereiche aufweisenden Hilfsspeicher S6 verbunden. Jeder Speicherbereich des Hilfsspeichers S6 dient zur Aufnahme von teileprogrammspezifischen temporären Daten TD1 bis TDn.

Die Schaltstufen SCH4 und SCH5 werden synchron von einem als Interpolatorsteuerwerk vorgesehenen Umsetzer U4 betrieben, wobei die Schaltstellungen der Schaltstufen SCH4 und SCH5 jeweils zyklisch von 1 bis n durchlaufen werden.

Im dargestellten Ausführungsbeispiel ist die Schalterstellung der Schaltstufen SCH4 und SCH5 so gewählt, daß die aktuellen Satzdaten SD3' des Teileprogramms TP3 dem Interpolator U2 zugeleitet werden und gleichzeitig die temporären Daten TD3 des Hilfsspeichers S6 zur Verfügung stehen. Sobald dem Interpolator U2 aktuelle Satzdaten, z. B. die aktuellen Satzdaten SD3', und die zugehörigen temporären Daten, z. B. die temporären Daten TD3, zur Verfügung stehen, ermittelt der Interpolator U2 fortlaufend jeweils eine Sehne des jeweils aktuellen Satzes. Sofern beispielsweise k Sehnen zu ermitteln wären, bis der aktuelle Satz vollzogen ist, ist es erforderlich, daß die Schaltstufen SCH4 und SCH5 für diesen Satz k Zyklen durchlaufen.

Stets dann, wenn der Interpolator U2 eine Sehne bestimmt hat, wird über ein Steuersignal auf einer Leitung L1 dies dem Umsetzer U4, der im folgenden auch als Interpolatorsteuerwerk bezeichnet wird, mitgeteilt. Das Steuersignal bewirkt über den Umsetzer U4 ein Fortschalten der Schalterstufen SCH4 und SCH5 um jeweils eine Stufe und leitet ferner über eine Leitung L3 dem Interpolator U2 ein Signal zum Auslösen eines neuen Interpolationsvorgangs zu.

Beim dargestellten Ausführungsbeispiel führen die Steuersignale auf der Leitung L1 stets dazu, daß die Schaltstufen SCH4 und SCH5 von den aktuellen Satzdaten SD1'zu den aktuellen Satzdaten SDn' schalten, während ein Rücksprung auf einen neuen Zyklus hierdurch nicht ausgelöst wird. Dieses Auslösen eines neuen Zyklusses erfolgt jeweils durch einen Takt eines von einem Taktgenerator TG dem Umsetzer U4 übermittelten Steuersignals.

Sofern vom Interpolator U2 jeweils für eines der Teileprogramme TP1 bis TPn jeweils ein vollständiger Satz abgearbeitet worden ist, wird über eine Leitung L2 ein diesbezügliches Steuersignal dem Interpolatorsteuerwerk U4 mitgeteilt, das daraufhin über Steuerleitungen ST1 bis STn zum einen den Umsetzer U3, dem Satzaufbereitungssteuerwerk, mitteilt, welches der Teileprogramme TP1 bis TPn nunmehr einen neuen Satz auslösen kann, sowie ferner das Einlesen eines neuen Satzes vom Pufferspeicher S4 in den Arbeitsspeicher S5 als Ersatz für den jeweils abgearbeiteten Satz veranlaßt.

Die Anzahl der Steuerleitungen ST1 bis STn ist dabei entsprechend der Anzahl der Teileprogramme TP1 bis TPn gewählt. An Stelle paralleler Steuerleitungen wäre auch eine einzige Steuerleitung denkbar, die teileprogrammspezifische Kennsignale führen würde.

Wenn beim Ausführungsbeispiel durch den Interpolator U2 erkannt wird, daß der aktuelle Satz SD3' abgearbeitet ist, bewirkt ein diesbezügliches Steuersignal auf der Leitung L2 im Umsetzer U4, daß von diesem über die Steuerleitung ST3 zum einen der Arbeitsspeicher S5 mit dem nächsten Satz SD3" des Teileprogramms TP3 aus dem Pufferspeicher S4 geladen wird und daß ferner vom Umsetzer U3 veranlaßt wird, daß die Schaltstufe SCH1 und die Schaltstufe SCH2 auf das diesbezügliche Teileprogramm, in diesem Fall das Teileprogramm TP3, geschaltet wird. Es zeigt sich daher, daß die Schaltstufen SCH1 und SCH2 keineswegs zyklisch und fortlaufend zu schalten sind, sondern jeweils auf die diesbezügliche Anforderung hin beliebig geschaltet werden. Der Umsetzer U1 wird ferner jeweils mit jeder Satzquittung vom Umsetzer U3 angestossen, den Pufferspeicher S4 unverzüglich mit einem neuen auf den nunmehr aktuellen Satz hin folgenden Satz zu versorgen.

In der Darstellung ist ferner ein Geber G vorgesehen, der beim Vorliegen eines Startsignales S zunächst den Taktgenerator TG sperrt und über die Steuerleitungen ST1 bis STn zunächst aufeinanderfolgend das Einlesen der aufbereiteten Sätze SD1' bis SDn' in den Arbeitsspeicher S5 und SD1" bis SDn" in den Pufferspeicher S4 veranlaßt. Erst daraufhin wird der Taktgenerator TG wirksamgeschaltet, woraufhin beginnend mit dem aktuellen Satz SD1' die Schalter SCH4 und SCH5 ihren ersten Zyklus starten.

Die vom Interpolator U2 ermittelten Sehnen für jede der Achsen der Werkzeugmaschine WM, im dargestellten Beispiel m Achsen, steuern über einen Lageregler LR, der Rückmeldeslgnale über die tatsächliche Position der Achsen auswertet, die Achsen der Werkzeugmaschine WM.

## Patentansprüche

1. Einrichtung zur Steuerung einer mehrachsigen Werkzeugmaschine (WM) gemäß vorgegebenen, simultan zu verarbeitenden Teileprogrammen (TP1-TPn), die jeweils eine Folge von Sätzen beinhalten, welche Ortsinformationen aufeinanderfolgender Bearbeitungspunkte enthalten und welche von einem interpolierenden Umsetzer (U2) jeweils in eine satzspezifische Anzahl von Sehnen der jeweils zu durchfahrenden Bearbeitungsbahn unterteilt werden, die zur Steuerung der vorgegebenen Achsen der Werkzeugmaschine (WM) dienen, wobei die Sätze jedes Teileprogramms (TP1-TPn) fortlaufend in teileprogrammspezifische Speicherbereiche mindestens eines Arbeitsspeichers (S5) eingespeichert werden, wobei vom interpolierenden Umsetzer (U2) sukzessiv innerhalb jeweils eines Zyklusses die jeweils aktuellen gespeicherten Sätze (SD1'-SDn') der Teileprogramme (TP1-TPn) abgefragt werden, wobei Zyklus auf Zyklus folgt und wobei jeweils nach einer Anzahl von Zyklen, welche die Interpolation eines jeweils aktuellen Satzes (SD1'-SDn') erfordert hat, jeweils ein folgender Satz (SD1"-SDn") des jeweiligen Teileprogramms (TP1-TPn) dem jeweiligen Speicherbereich des Arbeitsspeichers (S5) eingespeichert wird, wobei dieses Einspeichern des jeweils folgenden Satzes (SD1"-SDn") eines Teileprogramms (TP1-TPn) jeweils durch ein den Abschluß des Ermittelns der jeweils letzten zu ermittelnden Sehne des jeweils aktuellen Satzes (SD1'-SDn') anzeigendes Quittungssignal des interpolierenden Umsetzers (U2) ausgelöst wird, **dadurch gekennzeichnet,** daß die sukzessive Fortschaltung innerhalb jedes Zyklusses zwischen den jeweils aktuellen Sätzen (SD1'-SDn') jeweils durch ein den Abschluß des Ermittelns der jeweils zu ermittelnden Sehne anzeigendes Quittungssignal des interpolierenden Umsetzers (U2) auslösbar ist.

2. Einrichtung nach Anspruch 1, **dadurch gekennzeichnet,** daß der Start jedes Zyklusses durch ein Taktsignal eines Taktgenerators (TG) auslösbar ist.

3. Einrichtung nach einem der vorstehenden Ansprüche, **dadurch gekennzeichnet,** daß vor dem Start der Zyklen der jeweils erste Satz jedes Teileprogramms (TP1-TPn) dem jeweils zugehörigen Speicherbereich des Arbeitsspeichers (S5) eingespeichert wird.

4. Einrichtung nach einem der vorstehenden Ansprüche, **dadurch gekennzeichnet,** daß die Zuführung der Sätze in den Arbeitsspeicher (55) über Pufferspeicher (S4) erfolgt, welche die den jeweils aktuellen gespeicherten Sätzen jeweils unmittelbar folgende Sätze beinhalten.

5. Einrichtung nach einem der vorstehenden Ansprüche, **dadurch gekennzeichnet,** daß dem interpolierenden Umsetzer (U2) ein Umsetzer für die Satzaufbereitung (U1) vorgeschaltet ist.

6. Einrichtung nach einem der vorstehenden Ansprüche, **dadurch gekennzeichnet,** daß dem interpolierenden Umsetzer (U2) und der Werkzeugmaschine (WM) ein Lageregler (LR) zwischengeschaltet ist.

## Claims

1. A device for controlling a multi-axis machine tool (WM) according to preselected part programs (TP1-TPn) to be processed simultaneously, which in each case contain a series of blocks, which contain location data of successive machining points and which are divided by an interpolating converter (U2) in each case into a block-specific number of steps of the machining path to be passed through in each case, which steps serve to control the preselected axes of the machine tool (WM), whereby the blocks of each part program (TP1-TPn) are stored continuously in part-programspecific memory regions of at least one working memory (S5), whereby the respective current stored blocks (SD1'-SDn') of the part programs (TP1-TPn) are scanned successively by the interpolating converter (U2) within a respective cycle, whereby one cycle follows another and whereby in each case after a number of cycles, which is necessitated by the interpolation of a respective current block (SD1'-SDn'), a following block (SD1"-SDn") of the respective part program (TP1-TPn) is, in each case, stored in the respective memory region of the working memory (S5), whereby this storing of the respective following block (SD1"-SDn") of a part program (TP1-TPn) is in each case tripped by a ready signal of the interpolating converter (U2) indicating the end of the determination of the respective last step of the respective current block (SD1'-SDn') to be determined, characterized in that the successive stepping up within each cycle between the respective current blocks (SD1'-SDn) can be tripped in each case by a ready signal of the interpolating converter (U2) indicating the end of the determination of the respective step to be determined.

2. A device according to claim 1, characterized in that the start of each cycle can be tripped by a clock signal of a clock generator (TG).

3. A device according to one of the preceding claims, characterized in that before the start of the cycles the respective first block of each part program (TP1-TPn) is stored in the respective associated memory region of the working memory (S5).

4. A device according to one of the preceding claims, characterized in that the supply of the blocks into the working memory (S5) occurs by way of buffer memories (S4), which contain the blocks following directly in each case the respective current stored blocks.

5. A device according to one of the preceding claims, characterized in that a converter for the block processing (U1) is connected before the interpolating converter (U2).

6. A device according to one of the preceding claims, characterized in that a position controller (LR) is inserted between the interpolating converter (U2) and the machine tool (WM).

## Revendications

1. Dispositif de commande d'une machine-outil à axes multiples conformément à des programmes partiels (TP1 à TPn) donnés à l'avance, devant être traités simultanément et contenant chacun une suite de modules de programme qui contiennent une information concernant l'emplacement de points successifs d'usinage et qui sont subdivisés, par un convertisseur (U2) d'interpolation, respectivement en un nombre, spécifique au module, de cordes de la trajectoire d'usinage devant être parcourue, qui servent à commander les axes donnés à l'avance de la machine-outil (WM), les modules partiels (TP1 à TPn) de chaque programme étant mémorisés de façon continue dans des zones, spécifiques au programme partiel, d'au moins une mémoire de travail (S5), les modules (SD1' à SDn') présents mémorisés des programmes partiels (TP1 à TPn) étant interrogés successivement chacun dans un cycle par le convertisseur (U2) d'interpolation, cycle après cycle et, après un nombre de cycles qu'a exigé l'interpolation d'un module présent, un module (SD1' à SDn') suivant du programme partiel (TP1 à TPn) étant mémorisé dans la zone de la mémoire de travail (S5), cette entrée en mémoire du module (SD1' à SDn') suivant d'un programme partiel (TP1 à TPn) étant déclenché par un signal d'acquit du convertisseur (U2) d'interpolation, indiquant la fin de la détermination de la dernière corde à déterminer du module présent (SD1' à SDn'), caractérisé en ce que la progression successive dans chaque cycle entre les modules présents (SD1' à SDn') peut être déclenché par un signal d'acquit du convertisseur (U2) d'interpolation, indiquant la fin de la détermination de la corde à déterminer.

2. Dispositif suivant la revendication 1, caractérisé par le fait que le début de chaque cycle peut être déclenché par un signal de cadence d'un générateur de cadence (TG).

3. Dispositif suivant l'une des revendications précédentes, caractérisé par le fait qu'avant le début des cycles, le premier module de chaque programme partiel (TP1 à TPn) est mémorisé temporairement dans la zone respectivement associée de la mémoire de travail (S5).

4. Dispositif suivant l'une des revendications précédentes, caractérisé par le fait que l'envoi des modules dans la mémoire de travail (S5) s'effectue par l'intermédiaire de mémoires tampons (S4) , qui contiennent les modules qui succèdent directement aux modules présents mémorisés.

5. Dispositif selon l'une des revendications précédentes, caractérisé par le fait qu'un convertisseur (U1) servant à préparer les modules est branché en amont du convertisseur d'interpolation (U2).

6. Dispositif suivant l'une des revendications précédentes, caractérisé par le fait qu'un régulateur de position (LR) est intercalé entre le convertisseur d'interpolation (U2) et la machine-outil (WM).
